# EUROPÄISCHE PATENTANMELDUNG

(11) **EP 2 952 282 A1**
(43) Veröffentlichungstag der Anmeldung: **09.12.2015**
(21) Anmeldenummer: 14170809.9
(22) Anmeldetag: 02.06.2014
(51) Int. Cl.: B23K 20/233, B32B 15/01, B32B 15/085, C22C 21/00

(54) **Folienvorwalzband**

(71) Anmelder: Amag Rolling GmbH, 5282 Braunau am Inn - Ranshofen (AT)
(72) Erfinder: Steckenbauer, Hermann, 5282 Ranshofen (AT)
(74) Vertreter: Jell, Friedrich

(57) **Zusammenfassung**

Es wird ein Folienvorwalzband (1) mit mindestens einer Schicht auf AlFeSi-Basis gezeigt. Um hohe Festigkeit, Umformbarkeit sowie gute Beschichtbarkeit an einer daraus hergestellten Trägerfolie (100) zu gewährleisten, wird vorgeschlagen, dass das Folienvorwalzband (1) eine Kernschicht (2) auf AlMg-Basis und eine Plattierschicht (3) auf AlFeSi-Basis mit maximal 0,05 Gew.-%, insbesondere maximal 0,03 Gew.-%, Magnesium (Mg) aufweist.

## Beschreibung

Die Erfindung betrifft eine Folienvorwalzband mit mindestens einer Schicht auf Al-FeSi-Basis.

Der Stand der Technik kennt Folien auf AlFeSi-Basis bzw. auf einer Aluminiumlegierung der 8xxx-Serie (DE60024806T2). Zu deren Herstellung wird ein Folienvorwalzband auf AlFeSi-Basis in mehreren Walzschritten auf eine gewünschte Foliendicke kaltgewalzt und anschließend weichgeglüht, um herstellbedingte Kaltverfestigungen zu reduzieren.

Solche AlFeSi-Folien werden beispielsweise bei Verbundfolien für Verpackungen verwendet, um als diffusionsdichte Trägerfolie den Anforderungen einer Beschichtung durch Bedruckung, Lackierung oder Kaschierung zu genügen (EP2492089A1). Nachteilig ist eine Folienherstellung aus einem AlFeSi-Folienvorwalzband vergleichsweise aufwendig, um so an der erzeugten Folie neben einer ausreichenden mechanischen Festigkeit auch noch eine ausreichende Kaltumformbarkeit gewährleisten zu können. Des Weiteren fordert ein AlFeSi-Folienvorwalzband einen relativ hohen Reinheitsgehalt an Legierungselementen - daher bestehen sie meist aus Primäraluminium, was sich nachteilig bei den Herstellungskosten niederschlägt.

Die Erfindung hat sich daher die Aufgabe gestellt, ein Folienvorwalzband der eingangs geschilderten Art derart zu verändern, dass damit die Herstellung von Folien erleichtert wird, dennoch aber bei der daraus hergestellten Folie mit keiner Einschränkung in der Festigkeit, der Kaltumformbarkeit, der Diffusionsdichtheit und/oder der Beschichtbarkeit zu rechnen ist. Zudem soll das Folienvorwalzband kostengünstig sein.

Die Erfindung löst die gestellte Aufgabe dadurch, dass das Folienvorwalzband eine Kernschicht auf AlMg-Basis und eine Plattierschicht auf AlFeSi-Basis mit maximal 0,05 Gew.-%, insbesondere maximal 0,03 Gew.-%, Magnesium (Mg) aufweist.

Weist das Folienvorwalzband eine Kernschicht auf AlMg-Basis und eine Plattierschicht auf AlFeSi-Basis mit 0 bis maximal 0,05 Gew.-% Magnesium (Mg) auf, kann zunächst - und zwar aufgrund der AlMg-Basis - eine kostengünstige Legierung mit vergleichsweise hohem Grad an Sekundäraluminium eingesetzt werden. Zusätzlich können - durch die AlFeSi-Plattierschicht - vergleichsweise hohen Anforderungen an Diffusionsdichtigkeit und Beschichtbarkeit erhalten bleiben. Letztgenanntes wird insbesondere durch den vergleichsweise niedrigen Mg-Gehalt von 0 bis maximal 0,05 Gew.-% Magnesium (Mg) gewährleistet, wobei die AlFeSi-Plattierschicht zudem als Sperrschicht gegenüber einer unerwünschten Mg-Diffusion aus der Kernschicht in die Oxidschicht des Folienvorwalzbands dient. Das erfindungsgemäße Folienvorwalzband kann daher für daraus herstellte Folien selbst bei vergleichsweise langen Lagerzeiten höchsten Anforderungen zur Beschichtung - etwa durch Bedruckung, Lackierung oder Kaschierung - genügen. Dies kann sich weiter verbessern, wenn die AlFeSi-Plattierschicht einen weiter reduzierten Mg-Gehalt von 0 bis maximal 0,03 Gew.-% Magnesium (Mg) aufweist. Auch kann die erfindungsgemäße AlFeSi-Plattierschicht die Folienherstellung erheblich erleichtern. Diese Plattierschicht übt nämlich selbst beim Glühen des fertiggewalzten Folienvorwalzbands eine Sperrschicht gegenüber einer unerwünschten Mg-Diffusion von der Kernschicht hin zur Oxidschicht der Folie aus. Der Anteil an magnesiumhaltigen Oxiden kann damit gering bleiben und meist aufwendige Gegenmaßnahmen in der Folienherstellung vermeiden. Außerdem kann dieser mehrschichtige Aufbau des Folienvorwalzbands eine besonders vorteilhafte Verbindung von Folieneigenschaften gewährleisten, nämlich hohe Festigkeit durch die Kernschicht auf AlMg-Basis und gute Umformbarkeit aufgrund der Plattierschicht auf AlFeSi-Basis. Solch eine daraus hergestellte Folie kann daher bei einem im Zuge einer Verpackungsformgebung selbst engen Umformradien folgen und in weiterer Folge entsprechend komplexe Verpackungsdesigns ermöglichen, die aufgrund der hohen Steifigkeit ausreichend formstabil sind, um verschiedenste Produkte aufzunehmen. Dies auch dann, wenn dünne Folien verwendet werden, um Verpackungsmaterial zu reduzieren. Außerdem kann zur Erreichung vorstehend zitierter Vorteile auch der AlFeSi-Legierungsanteil des Folienvorwalzbands vermindert werden, was Vorteile bei den Herstellungskosten bringen kann.

Im Allgemeinen wird erwähnt, dass vorteilhaft das Folienvorwalzband aus der Kernschicht und aus der Plattierschicht bestehen kann. Der Vollständigkeit halber wird weiter erwähnt, dass als Sekundäraluminium Aluminium bzw. eine Aluminiumlegierung, hauptsächlich gewonnen aus Aluminiumschrott, verstanden werden kann. Des Weiteren wird im Allgemeinen erwähnt, dass unter Folie ein Blech bzw. Band mit einer Dicke von 0,006 bis 0,2 mm verstanden werden kann. Unter einem Folienvorwalzband kann ein Blech bzw. Band mit einer Dicke von 0,2 bis 1 mm verstanden werden. Weiter wird im Allgemeinen erwähnt, dass ein Schicht auf AlMg-Basis jede Aluminiumlegierung, die als Hauptbestandteil Al und dazu geringer in Gewichtsprozent Mg aufweist, umfasst, was weitere im Gewichtsprozent zur Al und Mg geringere Legierungselemente in dieser Schicht auf AlMg-Basis nicht ausschließt. Das gleiche im übertragenen Sinne gilt auch für die anderen Schicht auf einer anderen Basis (AlFeSi-Basis, AlMgMn-Basis, AlFeSiMn-Basis, etc.).

Vorteilhafte Umformeigenschaften am Folienvorwalzband bzw. auch an der daraus hergestellten Folie können sich ergeben, wenn die Kernschicht eine AlMgMn-Basis und die Plattierschicht eine AlFeSiMn-Basis aufweisen.

Vorzugsweise kann die Kernschicht aus einer Aluminiumlegierung der 5xxx-Serie bestehen, um damit einen vergleichsweise hohen Anteil an Sekundäraluminium zu erlauben. Zudem kann damit beim Glühen bzw. Weichglühen des umgeformten bzw. walzreduzierten Vorwalzbandes ein vergleichsweise gutes Verhältnis von Festigkeit - unter anderem beeinflusst durch Mg₂Si-Ausscheidungen und die Anzahl von Versetzungen - zu ausreichender Umformbarkeit eingestellt werden. Eine derartige Folie kann sich daher besonders als Trägerfolie für eine Verbundfolie für eine Verpackung eignen.

Weist die Kernschicht maximal 6 Gew.-% Magnesium (Mg) auf, kann die Gefahr vermehrter Mg-Diffusion aus der Kernschicht in die AlFeSi-Plattierschicht bzw. an deren äußere Grenzschicht oder Oberfläche verringert werden. Mit Nachteilen in Bezug auf die dadurch verminderte Eignung zur Beschichtung durch Bedruckung oder Lackierung muss daher nicht gerechnet werden - obwohl das Folienvorwalzband bzw. die daraus hergestellte Folie Mg als Legierungsbestandteil aufweist.

Die Plattierschicht kann vorzugsweise aus einer Aluminiumlegierung der 8xxx-Serie bestehen, um Vorteile hinsichtlich Beschichtbarkeit zum Bedrucken, Lackieren oder Kaschieren bzw. hinsichtlich eines stoffschlüssigen Fügens mit Klebstoff gewährleisten zu können.

Dünnwandige Folien können aus dem Folienvorwalzband erzeugt werden, wenn an der Kernschicht die Plattierschicht vorgesehen ist. Der Anwendungsbereich des Folienvorwalzbands kann sich vergrößern und deren Handhabung erleichtern, wenn auf der Kernschicht beidseitig eine Plattierschicht vorgesehen ist. Auf diese Weise kann sich auch die Kaltumformbarkeit der aus dem Folienvorwalzband erzeugten Folie verbessern. Zudem kann dies die Weiterverarbeitung des Folienvorwalzbands erleichtern, weil damit beide Außenseiten gleiche mechanische und chemische Eigenschaften aufweisen.

Höchsten Anforderungen hinsichtlich einer Beschichtung durch Bedruckung, Lackierung oder Kaschierung kann reproduzierbar entsprochen werden, wenn die Dicke der Plattierschicht mindestens 3% beträgt. Bei solch einer Schichtdicke kann nämlich eine Mg-Diffusion an die äußere Grenzschicht bzw. Oberfläche selbst bei vergleichsweise langen Haltezeiten während des Weichglühens der foliengewalzten Trägerschicht vermieden werden. Eine Dicke der Plattierschicht von mindestens 10% kann zusätzliche Reserven in Hinblick auf die erhöhte Umformbarkeit der Folie und Mg-Konzentrationsvariationen innerhalb des Schichtverbunds schaffen.

Insbesondere hohe Werte in Diffusionsdichtigkeit und Kaltumformbarkeit kann die Plattierschicht erlauben, wenn diese

| | |
|---|---|
| 0,40 bis 2,0 | Gew.-% Eisen (Fe), |
| 0,05 bis 1,1 | Gew.-% Silizium (Si), |

und als Rest Aluminium sowie herstellungsbedingt unvermeidbare Verunreinigungen aufweist. Insbesondere ein Gehalt von 0,50 bis 1,15 Gew.-% Eisen (Fe) kann hierbei vorteilhafter sein. In diesem Zusammenhang kann diese Plattierschicht optional zusätzlich ein oder mehrere der folgenden Legierungselemente aufweisen:

| | |
|---|---|
| 0,05 bis 1,0 | Gew.-% Mangan (Mn), |
| max. 0,3 | Gew.-% Kupfer (Cu), |
| max. 0,05 | Gew.-% Chrom (Cr) |
| max. 0,2 | Gew.-% Zink (Zn), |
| max. 0,08 | Gew.-% Titan (Ti) |
| max. 0,05 | Gew.-% Zinn (Sn), Natrium (Na), Antimon (Sb), Zirkonium (Zr), Hafnium (Hf) oder Bor (B) |

Im Allgemeinen wird erwähnt, dass die Plattierschicht Verunreinigungen mit jeweils maximal 0,05 Gew.-% und gesamt höchstens 1 Gew.-% aufweisen kann.

Besonders kann sich das Folienvorwalzband zur Herstellung einer Trägerfolie eignen, beispielsweise verwendet bei einer Verbundfolie für eine Verpackung.

Weist die Verbundfolie eine Kunststoffschicht auf, kann mithilfe vergleichsweise einfacher konstruktiver Maßnahmen die Trägerfolie vor Kontaktkorrosion mit den Verpackungsgegenständen geschützt werden.

Die konstruktive Ausgestaltung der Verbundfolie kann weiter vereinfacht werden, wenn die Kunststoffschicht eine auf die Plattierschicht aufkaschierte, insbesondere Polypropylen-, Kunststofffolie ist.

Die Erfindung kann sich besonders auszeichnen, wenn das erfindungsgemäße Folienvorwalzband zur Herstellung einer Trägerfolie für eine Verbundfolie einer Verpackung verwendet wird.

In den Zeichnungen ist beispielsweise der Erfindungsgegenstand anhand eines Ausführungsbeispiels näher dargestellt. Es zeigen
- Fig. 1: eine vergrößerte Schnittansicht auf ein mehrschichtiges Folienvorwalzband,
- Fig. 2: eine vergrößerte Schnittansicht eine Trägerfolie, hergestellt aus dem Folienvorwalzband nach Fig. 1 und
- Fig. 3: eine vergrößerte Schnittansicht auf eine Verbundfolie, aufweisend die Trägerfolie nach Fig. 2.

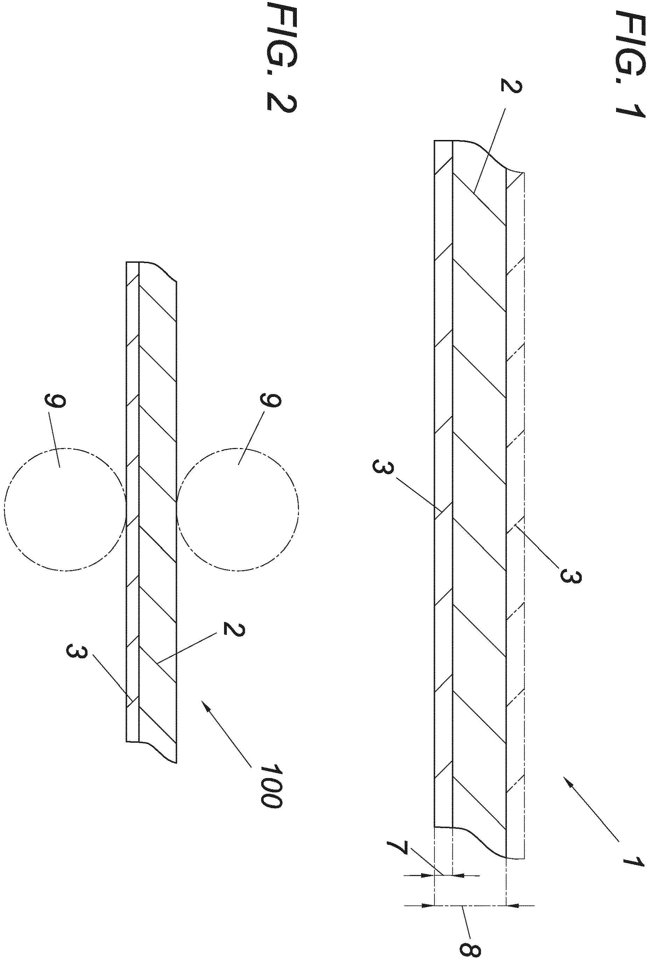

Die nach Fig. 1 beispielsweise dargestellte Folienvorwalzband 1 ist mehrschichtig aufgebaut. So weist diese eine Kernschicht 2 und eine Plattierschicht 3 auf. Die Plattierschicht 3 ist einseitig auf der Kernschicht 2 vorgesehen, optional kann diese Plattierschicht 3 auch auf beiden Seiten der Kernschicht 2 vorgesehen sein - wie dies nach Fig. 1 strichliert angedeutet worden ist.

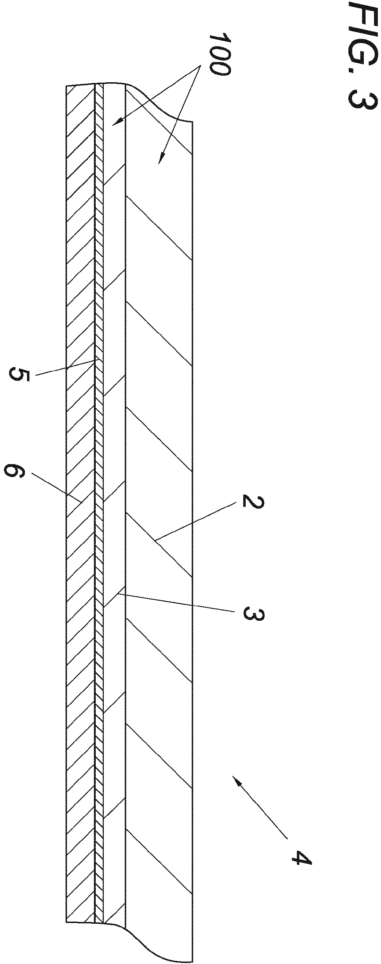

Für die Herstellung einer Folie bzw. Trägerfolie 100 durchläuft das Folienvorwalzband 1 ein Folienwalzen - beispielsweise in Fig. 2 durch ein Walzenpaar 9 angedeutet - und ein anschließendes nicht näher dargestelltes Glühen, um dann beispielsweise als Trägerfolie 100 bei einer Verbundfolie 4 nach Fig. 3 Verwendung finden zu können. Diese Trägerfolie 1 der Verbundfolie 4 wird neben seiner festigkeitsbestimmenden Funktion an der Verbundfolie 4 zudem zur Beschichtung, Bedruckung, Lackierung, Kaschierung oder dergleichen genutzt und bildet weiter auch die Barriereschicht der Verpackung aus. Solch eine Verpackung kann durch Kaltumformen, beispielsweise Zugdruckumformen, Tiefziehen, Streckziehen oder dgl. aus der Verbundfolie 4 geformt werden.

Die Trägerfolie 100 muss daher die Eigenschaften einer ausreichenden Umformbarkeit zur Formgebung, einer ausreichenden Festigkeit zur Gewährleistung hoher Formstabilität für eine sichere Aufnahme von Produkten/Waren, eine Barriereschicht sowie eine ausreichende Beschichtbarkeit erfüllen können.

Dies wird erfindungsgemäß dadurch gelöst, dass das Folienvorwalzband 1 eine Kernschicht 2 mit einer AlMg-Basis und eine Plattierschicht 3 mit einer AlFeSi-Basis mit maximal 0,05 Gew.-% Magnesium (Mg) aufweist. So sorgt die Kernschicht 2 durch die AlMg-Basis, beispielsweise eine 5049-Legierung, für eine ausreichende Festigkeit an der Trägerfolie 100, was die Standfestigkeit der Verpackung sicherstellt. Die Plattierschicht 3 mit einer AlFeSi-Basis, beispielsweise eine 8011-Legierung, sorgt aufgrund des geringen Magnesiumgehalts von 0 bis maximal 0,05 Gew.-%, bevorzugt bis maximal 0,3 Gew.-%, für eine hohe Umformbarkeit und standfeste Beschichtbarkeit für Bedruckung, Lackierung oder dergleichen der Trägerfolie 100. Letztgenannter Vorteil ist besonders geprägt durch die Vermeidung von magnesiumhaltigem Oxid, zum Beispiel MgO, MgAl₂O₄ oder dergleichen, in der Oxidschicht - was erfindungsgemäß im Übrigen auch durch den vergleichsweise hohen Mg-Gehalt der Kernschicht 2 nicht beeinträchtigt werden kann, da die Plattierschicht 3 hierfür eine ausreichende Sperrwirkung entfaltet. Diese Vorteile entfalten sich auch beim Weichglühen des fertiggewalzten Folienvorwalzbands 1.

Wie der Fig. 3 weiter entnommen werden kann, ist die Trägerfolie 100 mit einer Polypropylen-Kunststofffolie 5 versehen, die auf die Trägerfolie 100 mithilfe eines Klebstoffs 6 aufkaschiert ist. Die Polypropylen-Kunststofffolie 5 bietet unter anderem einen chemischen Schutz der Trägerfolie 100 gegenüber den nicht näher dargestellten Verpackungsgegenständen. Die Plattierschicht 3 der Verbundfolie 4 ist daher an der Verpackung innenliegend vorgesehen, und stellt eine besonders standfeste stoffschlüssige Klebeverbindung mit der Kunststofffolie 5 sicher. Eine Plattierschicht 3 kann aber auch außen liegend an der Kernschicht 2 vorgesehen sein, was nicht näher dargestellt worden ist, um damit die Bedruckung, Lackierung etc. der Verpackung zu erleichtern.

Mit der Maßgabe, dass die Kernschicht 2 maximal 6 Gew.-% Magnesium (Mg) aufweist und die Dicke 7 der Plattierschicht 3 mindestens 3%, insbesondere mindestens 10%, der Gesamtdicke 8 des Folienvorwalzband 1 entspricht, kann für Mg der Kernschicht 2 eine ausreichende hohe Diffusionssperre sichergestellt werden-selbst bei langen Lagerzeiten - auch beim Glühen des fertiggewalzten Folienvorwalzbands 1.

Wie bereits ausgeführt wirkt sich die verringerte Mg-Diffusion in die Oxidschicht der Plattierschicht 3 wiederum vorteilhaft auf die Beschichtbarkeit aus. Es ist somit gezeigt, dass die Erfindung trotz Verwendung von Sekundäraluminium eine Kombination der geforderten Eigenschaften in sich vereint.

## Patentansprüche

1. Folienvorwalzband mit mindestens einer Schicht auf AlFeSi-Basis, **dadurch gekennzeichnet, dass** das Folienvorwalzband (1) eine Kernschicht (2) auf AlMg-Basis und eine Plattierschicht (3) auf AlFeSi-Basis mit maximal 0,05 Gew.-%, insbesondere maximal 0,03 Gew.-%, Magnesium (Mg) aufweist.

2. Folienvorwalzband nach Anspruch 1, **dadurch gekennzeichnet, dass** die Kernschicht (2) eine AlMgMn-Basis und die Plattierschicht (3) eine AlFeSiMn-Basis aufweisen.

3. Folienvorwalzband nach Anspruch 1 oder 2, **dadurch gekennzeichnet, dass** die Kernschicht (2) aus einer Aluminiumlegierung der 5xxx-Serie besteht.

4. Folienvorwalzband nach Anspruch 1, 2 oder 3, **dadurch gekennzeichnet, dass** die Kernschicht (2) maximal 6 Gew.-% Magnesium (Mg) aufweist.

5. Folienvorwalzband nach einem der Ansprüche 1 bis 4, **dadurch gekennzeichnet, dass** die Plattierschicht (3) aus einer Aluminiumlegierung der 8xxx-Serie besteht.

6. Folienvorwalzband nach einem der Ansprüche 1 bis 5, **dadurch gekennzeichnet, dass** an der Kernschicht (2), vorzugsweise beidseitig, die Plattierschicht (3) vorgesehen ist.

7. Folienvorwalzband nach einem der Ansprüche 1 bis 6, **dadurch gekennzeichnet, dass** die Dicke (7) der Plattierschicht (3) mindestens 3%, insbesondere mindestens 10%, der Gesamtdicke (8) des Folienvorwalzband (1) entspricht.

8. Folienvorwalzband nach einem der Ansprüche 1 bis 7, **dadurch gekennzeichnet, dass** die Plattierschicht (3)
| | |
|---|---|
| 0,40 bis 2,0 | Gew.-% Eisen (Fe), |
| 0,05 bis 1,1 | Gew.-% Silizium (Si), |
optional ein oder mehrere folgender Legierungselemente:
| | |
|---|---|
| 0,05 bis 1,0 | Gew.-% Mangan (Mn), |
| max. 0,3 | Gew.-% Kupfer (Cu), |
| max. 0,05 | Gew.-% Chrom (Cr) |
| max. 0,2 | Gew.-% Zink (Zn), |
| max. 0,08 | Gew.-% Titan (Ti) |
| max. 0,05 | Gew.-% Zinn (Sn), Natrium (Na), Antimon (Sb), Zirkonium (Zr), Hafnium (Hf) oder Bor (B) |
und als Rest Aluminium sowie herstellungsbedingt unvermeidbare Verunreinigungen aufweist.

9. Trägerfolie, hergestellt aus einem Folienvorwalzband (1) nach einem der Ansprüche 1 bis 8.

10. Verbundfolie für eine Verpackung mit einer Kunststoffschicht (5) und mit einer mit Kunststoffschicht (5) verbundenen Trägerfolie (100) nach Anspruch 9.

11. Verbundfolie nach Anspruch 10, **dadurch gekennzeichnet, dass** die Kunststoffschicht eine auf die Plattierschicht (3) aufkaschierte, insbesondere eine Polypropylen-, Kunststofffolie (5) ist.

12. Verwendung eines Folienvorwalzbands (1) nach einem der Ansprüche 1 bis 8 zur Herstellung einer Trägerfolie (100) für eine Verbundfolie (4) einer Verpackung.
